# EUROPÄISCHE PATENTSCHRIFT

(11) **EP 2 300 256 B1**
(45) Veröffentlichungstag und Bekanntmachung des Hinweises auf die Patenterteilung: **17.07.2013**
(21) Anmeldenummer: 09761712.0
(22) Anmeldetag: 09.06.2009
(51) Int. Cl.: B60K 13/04

(54) **EINSATZELEMENT FÜR EINEN ZUR TANKSTELLENSEITIGEN BEFÜLLUNG MIT HARNSTOFF GEEIGNETEN BEHÄLTER**
INSERT ELEMENT FOR A CONTAINER SUITABLE FOR FILLING WITH UREA AT A FILLING STATION
ELEMENT RAPPORTE POUR UN RESERVOIR APTE A ETRE REMPLI D'UREE EN STATION-SERVICE

(30) Priorität: 09.06.2008 DE 102008027463; 26.09.2008 DE 102008049150
(43) Veröffentlichungstag der Anmeldung: 30.03.2011
(73) Patentinhaber: Tecinnovation GmbH, 40882 Ratingen (DE)
(72) Erfinder: TSIBERIDIS, Konstantinos, 74076 Heilbronn (DE)
(74) Vertreter: K & H Bonapat
(86) Internationale Anmeldenummer: PCT/EP2009/057084
(87) Internationale Veröffentlichungsnummer: WO 2009/150149

(56) Entgegenhaltungen:
- EP-A2- 1 502 794
- WO-A1-2007/012488
- DE-U1-202005 011 575

## Beschreibung

Die Erfindung betrifft ein Einsatzelement für einen mit einer Einfüllöffnung versehenen Behälter, der zur tankstellenseitigen Befüllung mit Harnstoff mittels einer Zapfpistole geeignet ist. Die Erfindung betrifft auch einen Tankbehälter mit einem solchen Einsatzelement, durch das zu verhindern ist, dass versehentlich Kraftstoff in den Behälter eingefüllt wird.

Im Stand der Technik werden die beim Betrieb von Verbrennungsmotoren entstehenden Stickoxide unter anderem durch selektive katalytische Reduktion reduziert, indem die Abgase der Brennkraftmaschine durch einen sog. SCR-Katalysator (Selectiv Catalytic Reduction) geleitet werden. Zur chemischen Umwandlung der Stickoxide wird der SCR-Katalysator mit einer hochreinen, wasserklaren Harnstofflösung betrieben. Diese nach DIN genormte Harnstofflösung wird unter der Marke "AdBlue"^{©} geführt.

Aufgrund der steigenden Nachfrage wird die AdBlue^{©}-Harnstofflösung von immer mehr Tankstellenunternehmen an Zapfsäulen angeboten. Für die Verwendung von AdBlue^{ⓒ} ist am Fahrzeug ein zusätzlicher Tank vorgesehen, der auf gleiche Weise mit einer Zapfpistole einer Zapfsäule befüllt werden kann, wie das aus der Tankbefüllung mit Brennkraftstoff bekannt ist.

Da nun an einer Tankstelle unterschiedliche Brennkraftstoffe und auch AdBlue^{ⓒ}-Harnstoff aus Zapfsäulen entnehmbar sind, besteht die Gefahr einer Verwechslung des jeweiligen Füllmediums. Diese Gefahr ist zwischen Harnstoff und Diesel am größten, da obige SCR-Katalysatoren vorrangig in großvolumigen Dieselmaschinen von beispielsweise Lastkraftwagen verbaut werden, weil ein Harnstoff-Behälter mitgeführt werden muss, der zusätzlichen Raumbedarf und Gewicht bedeutet.

Um hier auszuschließen, dass AdBlue^{©} in einen Kraftstofftank gefüllt wird, ist in der Zapfpistole für Harnstoff an ihrem Auslaufrohr innenrohrseitig ein automatisches Magnetventil vorgesehen, das im Ruhezustand die Auslauföffnung des Auslaufrohres verschließt. Damit ist eine AdBlue^{©}-Abgabe selbst beim Betätigen der Zapfpistole bei geschlossenem Magnetventil unmöglich. Um nun einen Harnstoff-Fluss durch die Zapfpistole bewerkstelligen zu können, muss sich im Einfüllstutzen eines für AdBlue^{©} bestimmten Behälters ein Magnetadapter befinden, der beim Vorbeiführen des Auslaufrohres einer Harnstoff-Zapfpistole das hierin angeordnete Magnetventil zu öffnen vermag. Bei geöffnetem Magnetventil kann der Harnstoff am Auslaufrohr der Zapfpistole dann austreten. Ein solcher Magnetadapter, der u.a. auch in einer Ausführung zur Nachrüstung bestehender AdBlue-Tanks speziell ausgebildet sein kann, ist in der EP 1 502 794 B1 beschrieben.

Während, wie oben dargestellt, das Einfüllen von Harnstoff in den Dieseltank aufgrund des geschlossenen Magnetventils in der Zapfpistole unmöglich gemacht wird, wird das umgekehrte Befüllen des Harnstoffbehälters mit Diesel im Stand der Technik dadurch verhindert, indem die Einfüllöffnung so klein bemessen wird, dass eine Diesel-Zapfpistole mit ihrem Auslaufrohr nicht hindurch passt. Zu diesem Zweck werden für den AdBlue-Harnstoff ausschließlich Zapfpistolen verwendet, die gegenüber einer standardisierten Diesel-Zapfpistole ein Auslaufrohr mit kleinerem Durchmesser haben. Dieser besagte kleinere Durchmesser des Auslaufrohres entspricht bei Harnstoff-Zapfpistolen derzeit dem Durchmesser von Standard-Benzinzapfpistolen. Um zu verhindern, dass eine im Durchmesser des Auslaufrohres größere Dieselzapfpistole mit einem größeren Durchmesser in den Harnstoffbehälter versehentlich eingeführt werden könnte, weist der bereits im Einfüllstutzen des Harnstoffbehälters vorgesehene Magnetadapter eine Einfüllöffnung auf, deren Durchmesser kleiner ist als der Durchmesser des Diesel-Zapfpistolenauslaufrohres - wohingegen er so ausreichend groß ist, dass eine Zapfpistole mit 19 mm Auslaufrohr eingesteckt werden kann.

Nachteilhaft an dieser im Stand der Technik verbreiteten Lösung ist jedoch die Positionierung des Magnetadapters zu tief im Einfüllstutzen des AdBlue^{©}-Behälters, damit ein herkömmlicher Einfüllstutzen mit herkömmlichen Bajonett-Tankdeckeln verschließbar ist. Setzt man nun eine Dieselzapfpistole am Einfüllstutzen eines AdBlue^{©}-Behälters an und führt das Zapfpistolen-Auslaufrohr bis zur Öffnung des Magnetadapters, so kann sich beim Drückern der Pistole ausreichend Dieselkraftstoff im Einfüllstutzen bis zur oberen Einfüllöffnung desselben sammeln, wobei dieser sich im Einfüllstutzen ansammelnde Dieselkraftstoff natürlich in den AdBlue^{ⓒ}-Behälter läuft.

Aufgabe der Erfindung ist es daher, eine verbesserte Lösung einer Befüllsicherung für AdBlue^{©}-Harnstoffbehälter vorzusehen, die u.a. auch eine Nachrüstung an bestehenden Behälter berücksichtigt.

Gelöst wird diese Aufgabe durch die Bereitstellung eines Einsatzelements, das ein Abdeckelement mit einer Öffnung aufweist, deren lichte Weite kleiner ist als der Außendurchmesser eines für Dieselkraftstoff standardisierten Zapfpistolenauslaufrohres, sowie ein Haltemittel umfasst, mit dem das Abdeckelement an der Öffnungsebene des Einfüllstutzens positioniert befestigbar ist.

Grundgedanke der Erfindung ist es damit, die Einfüllöffnung am Außenrand - gesehen entlang der Längsrichtung des Einfüllstutzens - mit einem Abdeckelement zu versehen, das verhindert, dass sich vor dem Abdeckelement Dieselkraftstoff sammeln kann, der dann in den AdBlue^{©}-Behälter einfließen könnte. Da mit anderen Worten das Abdeckelement erfindungsgemäß an der Öffnungsebene des Einfüllstutzens angeordnet ist, kann sich im Einfüllstutzen selbst beim versehentlichen Betätigen einer Diesel-Zapfpistole, Dieselkraftstoff nicht vor dem Abdeckelement sammeln, da der Dieselkraftstoff sofort auf den Boden abtropft. In einem solchen Moment wird sofort bemerkt werden, dass ein Befüllen fehlschlägt, sodass der Tankvorgang abgebrochen wird, bevor auch nur minimale Mengen falschen Kraftstoffs in den AdBlue^{©}-Tank gelangen.

Im einfachsten Fall beinhaltet die Lösung ein Einsatzelement in Form einer über das Ende des Einfüllstutzens setzbaren Verschlusskappe, wobei das Abdeckelement mittels des Zylindermantels der Kappe als Haltemittel auf dem Ende des Einfüllstutzens an dessen Öffnungsebene gehalten wird. Das Abdeckelement hat dabei eine Öffnung, die das Einführen eines Auslaufrohres einer Harnstoff-Zapfpistole erlaubt, jedoch das Einführen einer Dieselzapfpistole verhindert.

Damit ein derartiges Einsatzelement auch verschließbar ist, weist das Abdeckelement an der Tank abgewandten Seite eine Rohrmuffe mit Außengewinde auf, auf die ein Deckel des Einsatzelementes aufgeschraubt werden kann. Dabei ist zu beachten, dass der Innendurchmesser der Rohrmuffe bündig mit der Öffnung des Abdeckelements 24 abschließen muss. Dann bildet nämlich die Innenfläche der Rohrmuffe mit der Öffnung des Abdeckelements eine in Längsrichtung des Einsatzelementes durchgehende Zylinderwand. So ist auch bei dieser Ausführungsform gewährleistet, dass sich kein Füll-Medium zwischen Abdeckelement und Innenwand der Rohrmuffe sammeln kann.

In vorteilhafter Weise ist es vorgesehen, dass entweder das Gewinde des Deckels oder das Gewinde der Rohrmuffe ein sog. ansteigendes Gewinde ist, um einen Widerstand zum Lösen des Deckels von der Rohrmuffe zu schaffen, so dass der Deckel nur durch gewollte manuelle Drehung lösbar ist. Alternativ ist eine Lösung vorgeschlagen, bei der am Umfang der Öffnung des Abdeckelements zwei gegenüberliegende Ausnehmung vorgesehen sind, in die an der Unterseite des Deckels vorgesehene Nasen eingreifen können, so dass zwischen Deckel und Reduzierstück ein Bajonettverschluss gebildet ist.

Gemäß einer vorteilhaften Ausführungsform weist das erfindungsgemäße Einsatzelement ein in den Einfüllstutzen des Behälters einschiebbares Reduzierstück auf. In diesem Reduzierstück kann dann in vorteilhafter Weise ein Magnet aufgenommen sein, der mit einem in einer Harnstoff-Zapfpistole vorgesehenen Magnetschalter wechselwirken, d.h. diesen öffnen kann. Bei dieser Ausführungsform wird der im Stand der Technik im Einfüllstutzen tief sitzende Magnetadapter hinfällig. Diese Lösung mit im Reduzierstück integriertem Magnetadapter gewährleistet eine sicheres Schalten des Magnetventils der Zapfpistole, weil es sein kann, dass der bereits bestehende installierte Magnetadapter derart tief im Einfüllstutzen positioniert ist, dass dieser Magnetadapter beim Einschieben einer AdBlue^{©}Zapfpistole das Magnetventil nicht mehr zu schalten vermag, weil die Zapfpistole nicht mehr so weit wie ursprünglich, d.h. ohne Einsatzelement eingeschoben werden kann. Dann muss zum Erwirken eines Harnstoff-Flusses der Magnet näher zum Abdeckelement hin platziert sein, was mit dieser Ausführungsform eines integrierten Magnetadapters im Reduzierstück geschaffen ist.

Die Tiefe des Reduzierstückes, mit der das Einsatzelement in den Einfüllstutzen einragt, ist dabei so bemessen, dass ein bereits vorliegender Magnetadapter nicht kontaktiert wird. Dies ist insbesondere dann erforderlich, wenn ein Harnstoffbehälter, der bereits mit einem Magnetadapter versehen ist, mit dem erfindungsgemäßen Einsatzelement nachgerüstet werden soll.

In einer vorteilhaften Ausführungsform weist das Reduzierstück am Außenumfang ein Außengewinde auf, mit dem das Reduzierstück in den Einfüllstutzen des Behälters einschraubbar ist.

Gemäß einer alternativen Ausführungsform ist vorgesehen, dass das Reduzierstück am Außenumfang Nasen aufweist, die mit dem Tankdeckelverschlusssystem des Einfüllstutzens zusammen einen Bajonettverschluss bilden. Beim Montieren des Einsatzelements wird dabei das Abdeckelement auf den Außenrand des Einfüllstutzens gedrückt und schließt diesen dichtend ab. Hierzu ist es insbesondere von Vorteil zwischen Abdeckelement und Außenrand eine Dichtung vorzusehen, die von dem Abdeckelement getragen wird.

Auch kann bei einer vorteilhaften Ausführungsform mit Reduzierstück dieses an seiner Einfüll-Öffnungsseite eine Bajonett-Ausnehmung haben. Das bedeutet, dass am Umfang der Öffnung des Abdeckelements zwei gegenüberliegende Ausnehmung vorgesehen sind, in die an der Unterseite des Deckels vorgesehene Nasen eingreifen können, so dass zwischen Deckel und Reduzierstück gleichermaßen ein Bajonettverschluss gebildet ist.

Der Deckel kann mittels einer Seilhalterung oder dergleichen am Reduzierstück bzw. dem Abdeckelement gesichert sein, damit dieser nicht verloren geht.

Da beim Einfüllen von Harnstoff in den Behälter die in letzterem vorliegende Luft entweichen muss und die Toleranzen zum Einpassen einer vorbestimmten Zapfpistole mit reduziertem Auslaufrohr gering sind, ist in vorteilhafter Weise vorgesehen, dass am Innenumfang des Reduzierstücks Ausnehmungen in seiner axialen Längsrichtung vorgesehen sind, so dass zwischen einer in das Einsatzelement eingesetzten Harnstoff-Zapfpistole und dem Reduzierstück Luft vom Innenraum des Behälters nach außen strömen kann. Die Größe der Ausnehmungen ist dabei abhängig vom Mengenfluss an AdBlue©-Harnstoff in den Tank - was der Fachmann zu bemessen weiß.

Gemäß einer weiteren vorteilhaften Ausführungsform weist das Einsatzelement einen Spezialwerkzeugschlüssel auf, der Nasen hat, die in oben genannte Ausnehmungen bzw. in die Bajonettausnehmung des Abdeckelements greifen können, um das Einsatzelement auf einem Einfüllstutzen durch Verdrehen zu arretieren.

Schließlich kann vorgesehen sein, dass eine Diebstahlsicherung des Einsatzelements in Form einer Schraube vorgesehen ist, die in eine in dem Reduzierstück quer zu seiner Achse vorgesehene Bohrung eindrehbar ist, so dass das Einsatzelement in dem Einfüllstutzen arretiert ist.

Die Erfindung betrifft schlussendlich einen Behälter für Harnstoff als Kfz-Tank, dessen Einfüllstutzen mit einem Einsatzelement nach obiger Beschreibung ausgerüstet ist. Das Einsatzelement kann dabei mit dem Einfüllstutzen einteilig ausgeführt sein.

Ferner betrifft die Erfindung einen mobilen, d.h. tragbaren Behälter mit einer Einfüllöffnung und einem die Einfüllöffnung verschließbaren, abnehmbaren Deckel, durch welche Einfüllöffnung mit Hilfe einer tankstellenseitigen Zapfpistole Harnstoff in den geöffneten Behälter gefüllt werden kann, wobei die Einfüllöffnung an ihrem in der Öffnungsebene liegenden Außenrand eine lichte Weite hat, die kleiner ist als der Außendurchmesser des für Dieselkraftstoff standardisierten Zapfpistolenauslaufrohres. Das bedeutet, dass das Auslaufrohr einer Zapfpistole mit zu großem Öffnungsdurchmesser keinen noch so minimalen Weg in den Behälter geführt werden kann.

In vorteilhafte Weiterbildung weist der tragbare Kanister unterhalb des Abdeckelements ein Magnet auf.

Als vorteilhaft ist für alle Ausführungsvarianten des Einsatzelements, des mobilen Kanisters oder Tanks angesehen, dass an der Einfüllöffnung eine Verschlussklappe angeordnet ist, die durch das Einschieben eines AdBlue-Auslaufrohres verschwenkt werden kann, um das Auslaufrohr tiefer in den Tank zu stecken. Diese Verschlussklappe schützt davor, dass auch mutwillig an die Öffnung des AdBlueⓒ-Tanks herangeführte Falsch-Flüssigkeiten nicht in den AdBlueⓒ-Tank gelangen. Gemäß einer Weiterführung dieser Ausführungsform ist ferner mindestens ein Kanal vorgesehen, der die Einfüllöffnung mit dem Rand des Einfüllstutzens verbindet, sodass eine auf die Verschlussklappe auftreffende Flüssigkeit über diesen Kanal nach außen ablaufen kann - also nicht in den AdBlue©-Tank gelangt. Die Verschlussklappe kann einteilig oder mehrteilig sein. Sie ist über ein Gelenk bewegbar gelagert, wobei sie vorteilhaft mit einer Feder vorgespannt ist, wodurch die Verschlussklappe in ihrer Ruhestellung in eine die Einfüllöffnung verschließende Position gebracht wird.

Die Erfindung wird nun mit Bezug auf die beigefügten Zeichnungen näher erläutert. In diesen zeigt
- Fig.1: das erfindungsgemäße Einsatzelement in perspektivischer Ansicht, wie es auf den Einfüllstutzen zu setzen ist;
- Fig. 2: eine Ausführungsform des erfindungsgemäßen Einsatzelements in Explosionsansicht und in einer am Einfüllstutzen montierten Ansicht;
- Fig. 3: eine weitere Ausführungsform des erfindungsgemäßen Einsatzelements;
- Fig. 4: eine weitere alternative Ausführungsform des Einsatzelements;
- Fig. 5: eine andere Ausführungsform des Einsatzelements; und
- Fig. 6: eine Ausführungsform der Erfindung mit Verschlussklappe

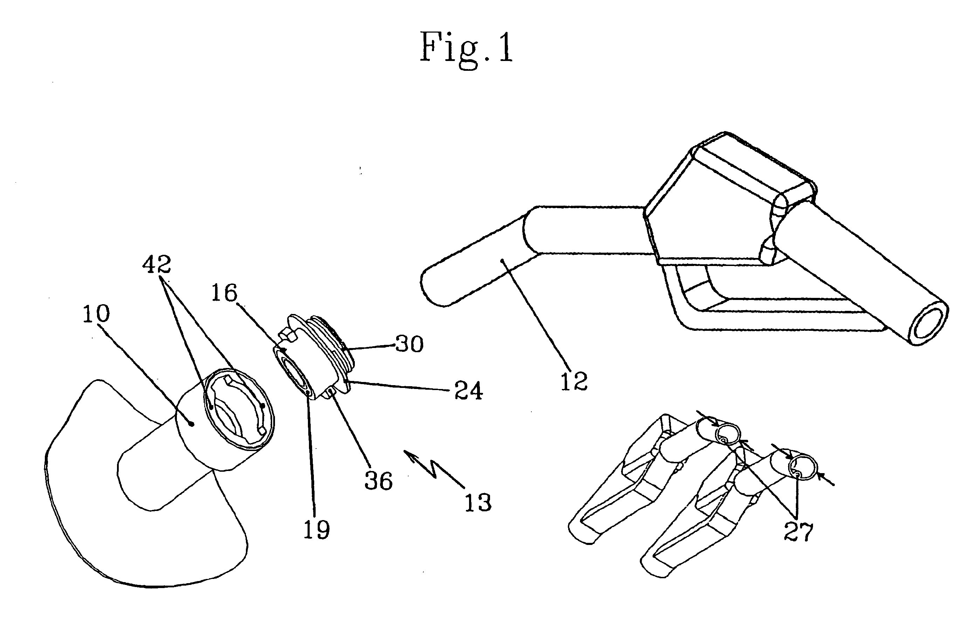

Figur 1 zeigt das erfindungsgemäße Einsatzelement 13 in perspektivischer Ansicht, wie es auf einem Einfüllstutzen 10 eines Tankbehälters aufsetzbar ist. Das Abdeckelement 24 hat eine Einführ-Öffnung (in dieser perspektivischen Darstellung nicht zu sehen), die das Einführen eines Auslaufrohres einer Harnstoff-Zapfpistole erlaubt, jedoch das Einführen einer Dieselzapfpistole verhindert. Mit anderen Worten hat das Abdeckelement einen ÖffnungsDurchmesser, so dass Zapfpistolen 12 mit einem reduzierten Durchmesser in den Einfüllstutzen 10 eingeführt werden können, wohingegen Zapfpistolen mit einem vergrößerten Auslaufrohr nicht durch die Öffnung des Abdeckelementes passen. In Figur 1 sind im unteren Bildabschnitt zwei Zapfpistolen mit unterschiedlichem Auslaufrohr gezeigt. Die linke Zapfpistole mit einem Auslaufrohr von ca. 21 mm ist für die standardisierte AdBlue-Betankung vorgesehen, wohingegen die rechte Darstellung eine Diesel-Zapfpistole mit größerem Auslauf-Durchmesser aufzeigt. Mit der Bezugsziffer 27 sind jeweils die Füllstands-Röhrchen der Zapfpistole gekennzeichnet, die zum automatischen Abschalten der Zapfpistole bei vollem Tank Einsatz finden.

Der Einfüllstutzen 10 weist ein herkömmliches Tankdeckel-Verschlusselement 42 am Außenrand des Einfüllstutzens auf. Komplementär zu diesem Tankdeckel-Verschlusselement 42 mit seinen zwei gegenüberliegenden Ausnehmungen weist das Einsatzelement zwei Nasen 36 auf, so dass aus der Kombination des Verschlusselementes mit den Nasen und dem Abdeckelement 24 ein Bajonett-Verschluss gebildet ist. Beim Arretieren des Einsatzelementes wird das Abdeckelement 24 auf die Oberseite des Tankdeckel-Verschlusselementes gedrückt. Ein unterhalb des Abdeckelements angeordneter Dichtungsring (hier nicht gezeigt) schafft einen dichten Verschluss.

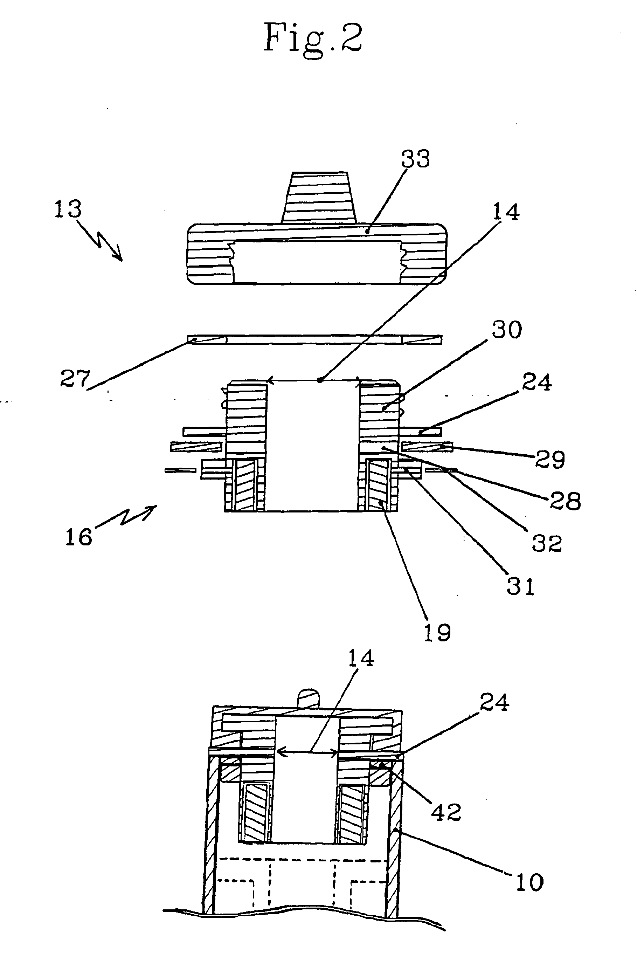

Damit das Einsatzelement 13 selbst verschlossen werden kann, ist an der Oberseite des Abdeckelements 24 eine Rohrmuffe 30 mit Außengewinde angeordnet, auf das ein Deckel (in dieser Darstellung nicht gezeigt) des Einsatzelementes aufgeschraubt werden kann. Bei dieser Ausführungsform mit Rohrmuffe ist zu beachten, dass deren Innendurchmesser bündig mit der Öffnung des Abdeckelements 24 abschließen sollte. Mit anderen Worten bildet die Innenfläche der Rohrmuffe dann mit der Öffnung des Abdeckelements eine in Längsrichtung des Einsatzelementes durchgehende Zylinderwand. Dann ist auch bei dieser Ausführungsform gewährleistet, dass sich kein Medium zwischen Abdeckelement 24 und Innenwand der Rohrmuffe sammeln kann und eine herangeführte Zapfpistole mit ihrem Auslaufrohr nur bis an die Öffnungsebene der Rohrmuffe gelangt und nicht weiter hinein zum Abdeckelement (siehe hierzu Detail in Fig. 2).

In Figur 2 ist das Einsatzelement 13 aus Figur 1 in größerem Detail gezeigt. Der Deckel 33 ist am Außengewinde der Rohrmuffe 30 aufschraubbar, wobei ein Dichtelement 27 zum Abdichten des Deckels am Abdeckelement 24 vorgesehen ist. An der Unterseite des Einsatzelementes 13 ist ein ringförmiger Magnet 19 eingesetzt, der mittels Sicherungsschrauben 32 (schematisch dargestellt) gehalten wird, die in hierfür vorgesehene quer liegende Öffnungen 31 des Reduzierstücks eingeschraubt werden. Es ist dabei selbstverständlich, dass der Magnet in dem Reduzierstück auch verklebt bzw. durch einzutreibende Sicherungsstifte oder dergleichen gehalten werden kann. Auch kann die Form des Magneten variieren. Die Öffnung 14 ist so bemessen, dass Auslaufrohre von Diesel-Zapfpistolen nicht hindurch passen - Auslaufrohre von Zapfpistolen für Harnstoff aber schon.

In dem Reduzierstück 16 sind bei dieser Ausführungsform ferner quer liegende Öffnungen 28 vorgesehen, in die Sicherungsschrauben 29 (schematisch dargestellt) zum zusätzlichen Fixieren des Einsatzelementes 13 im Einfüllstutzen dienen. Eine diesbezügliche Verschraubung durch die Sicherungsschrauben 29 in den Öffnungen 28 fungiert gleichermaßen als Diebstahlsicherung, weil ein derart montiertes Einsatzelement nicht mehr nur durch Drehen des Reduzierstückes entnommen werden kann.

In der unteren Darstellung von Figur 2 ist das Einsatzelement im montierten Zustand dargestellt. Wie gezeigt sitzt das Abdeckelement 24 auf dem Tankdeckel-Verschlusselement 42 des Einfüllstutzens 10. Im unteren Abschnitt dieser Darstellung ist in gestrichelter Linie die Position eines gegebenenfalls bereits vorinstallierten Magnetadapters zu sehen. Hierdurch wird deutlich, dass das erfindungsgemäße Einsatzelement 13 zum Nachrüsten in mit Magnetadaptern bestehenden Behältern nur solche Abmessungen haben darf, dass es nur so tief in den Einfüllstutzen einragt, dass es nicht auf einen bestehenden Magnetadapter stößt.

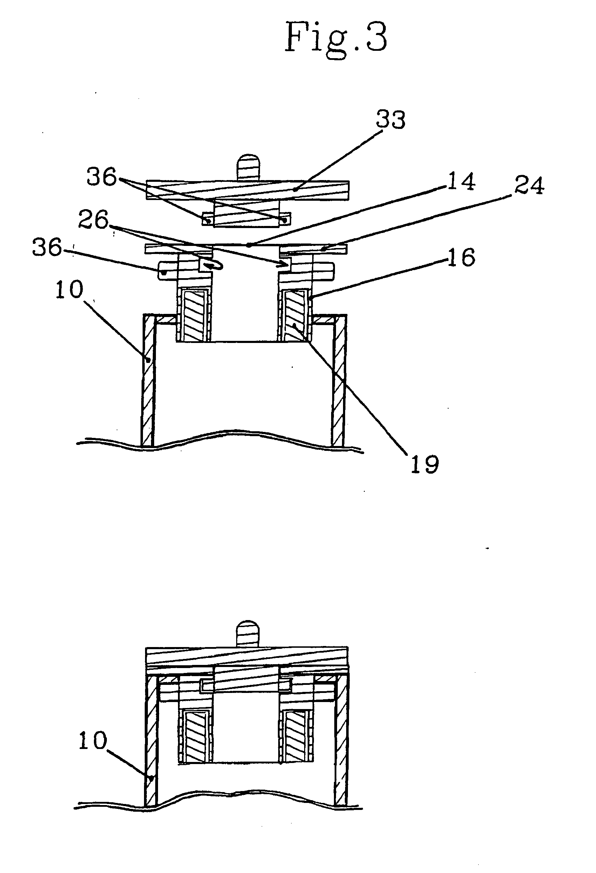

Figur 3 zeigt nun eine weitere Ausführungsform des erfindungsgemäßen Einsatzelementes, bei dem das Reduzierstück 16 Bajonett-Ausnehmungen 26 aufweist, in die Nasen 36 des Deckels 33 zur Bildung eines Bajonett-Verschlusses zwischen Deckel und Reduzierstück greifen können. In der Draufsicht auf das Reduzierstück, d.h. auf dessen Öffnungsseite zeigt sich ein an zwei diametral gegenüberliegenden Seiten offener Kreis. Die Nasen 36 sind vorteilhaft keilförmig ausgebildet, sodass der Sitz des Deckels mit zunehmender Drehung fester wird und dieser nicht losvibrieren kann. In der unteren Darstellung von Figur 3 ist diese Ausführungsform des Einsatzelementes im montierten Zustand zu sehen.

Bei dieser Ausführungsform ist ferner vorteilhaft realisiert, dass der Deckel aufgrund seiner geringen Höhe nur minimal vom Abdeckelement 24 abragt. Die minimale Höhe des Deckels 33 geht dabei darauf zurück, dass im Deckel kein Gewinde vorzusehen ist, so dass die eigentliche Deckelfläche des Deckels 33 schmal, bzw. mit geringer Höhe ausgeführt werden kann.

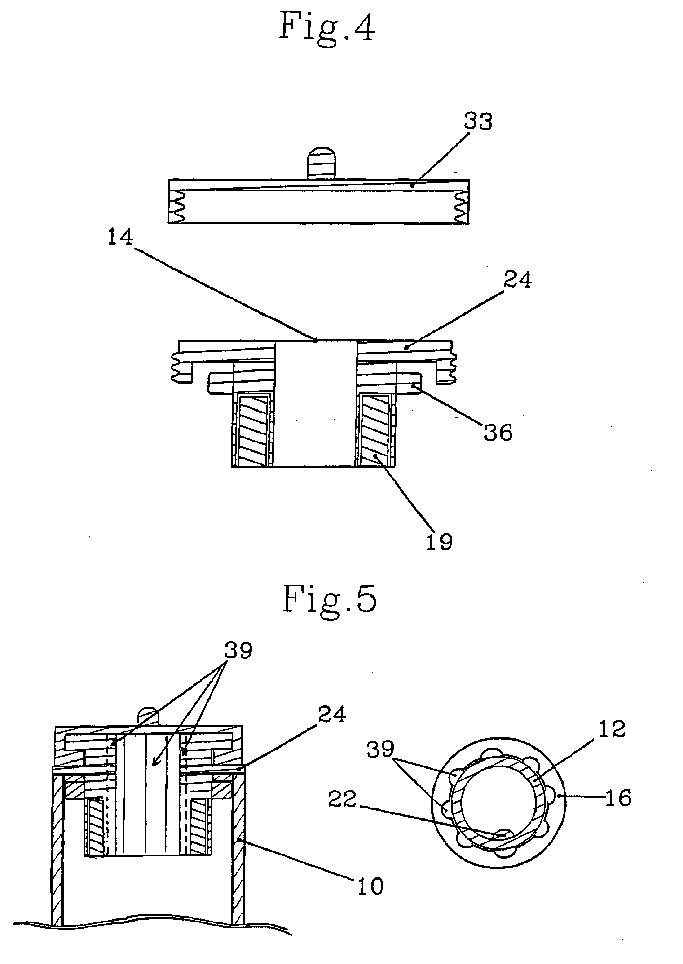

In Figur 4 ist eine weitere Ausführungsform des Einsatzelementes gezeigt, bei der das Abdeckelement 24 über den Außenrand des Verschlusselementes (in Figur 4 nicht gezeigt) des Einfüllstutzens 10 ragt, und am Außenumfang ein Gewinde aufweist, das zum Verschrauben mit dem Innengewinde des Deckel 33 dient.

Figur 5 zeigt eine Ausführungsform des Einsatzelementes, bei dem das Reduzierstück mit in dessen Längsrichtung angeordneten Ausnehmungen 39 versehen ist. Diese Ausnehmungen 39 dienen dazu, dass Luft von der Tankinnenseite selbst im Zustand einer eingeschobenen Zapfpistole austreten kann. In der rechtsseitigen Darstellung von Figur 5 ist hierzu eine Draufsicht mit geschnittenem Auslaufrohr 12 einer Zapfpistole gezeigt. Hier ist deutlich zu erkennen, wie zwischen der Außenwand des Auslaufrohres und der Innenwand des Reduzierstücks 16 mittels den Ausnehmungen 39 Luft hindurchströmen kann. Mit Bezugsziffer 22 ist ein Füllstandregel-Röhrchen der Zapfpistole bezeichnet.

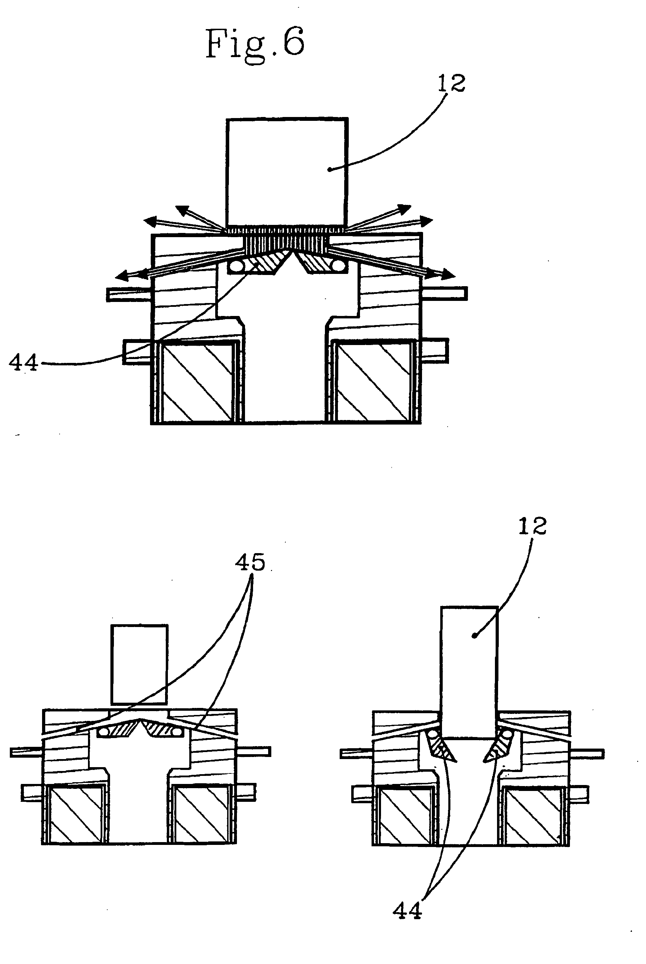

Figur 6 zeigt eine Ausführungsform mit Verschlussklappe 44, die in diesem Beispiel zweiteilig ausgeführt ist. In der Ruhestellung wird durch die Verschlussklappe 44 die Einfüllöffnung verschlossen. In der oberen Darstellung von Fig. 6 ist schematisch gezeigt, was passiert, wenn mit einer Dieselpistole versucht wird, Kraftstoff in den AdBlue©-Tank einzufüllen: Der aus dem Auslaufrohr austretende Kraftstoff fließt ab, ohne in den AdBlue©-Tank zu gelangen. Diese Maßnahme wird vorteilhaft mit Hilfe der Ablaufkanäle 45 verbessert. Erst durch Einschieben des Auslaufrohres einer AdBlue©-Zapfpistole wird die Verschlussklappe 44 verschwenkt und AdBlue©-Harnstoff kann eingefüllt werden.

**Bezugszeichenliste**

| | |
|---|---|
| 10 | Einfüllstutzen eines Behälters |
| 12 | Zapfpistole, bzw. deren Auslaufrohr |
| 13 | Einsatzelement |
| 14 | Öffnung des Einsatzelementes |
| 16 | Reduzierstück |
| 19 | Magnet |
| 22 | Füllstandregler-Röhrchen |
| 24 | Abdeckelement |
| 26 | Bajonett-Ausnehmung |
| 27 | Dichtung |
| 28 | Öffnung für Sicherung am Einfüllstutzen |
| 29 | Sicherungsschraube |
| 30 | Rohrmuffe mit Außengewinde |
| 31 | Öffnung für Sicherung des Magneten |
| 32 | Sicherungsschraube |
| 33 | Deckel |
| 36 | Nasen für Bajonett-Verschluss |
| 39 | Ausnehmungen |
| 42 | Tankdeckel-Verschlusselement |
| 44 | Verschlussklappe |
| 45 | Ablaufkanal |

## Patentansprüche

1. Einsatzelement (13) für einen mit einem Einfüllstutzen (10) versehenen Behälter, der zur tankstellenseitigen Befüllung mit Harnstoff mittels einer Zapfpistole (12) geeignet ist, welches Einsatzelement (13)
- ein Abdeckelement (24) mit einer Öffnung, deren lichte Weite kleiner ist als der Außendurchmesser eines für Dieselkraftstoff standardisierten Zapfpistolen-Auslaufrohres (12),
- sowie ein Haltemittel aufweist, mit dem das Abdeckelement (24) an der Öffnungsebene des Einfüllstutzens (10) positioniert befestigbar ist, sodass sich Diesel-Kraftstoff nicht vor dem Abdeckelement sammeln kann.

2. Einsatzelement (13) gemäß Anspruch 1,
**dadurch gekennzeichnet, dass** das Einsatzelement ein in den Einfüllstutzen (10) des Behälters einschiebbares Reduzierstück (16) aufweist.

3. Einsatzelement (13) gemäß Anspruch 1 oder 2,
**dadurch gekennzeichnet, dass** in dem Reduzierstück (16) ein Magnet (19) aufgenommen ist, der mit einem in Harnstoff-Zapfpistolen (12) vorgesehenen Magnetschalter wechselwirken kann.

4. Einsatzelement (13) gemäß einem der vorangehenden Ansprüche 2 oder 3,
**dadurch gekennzeichnet, dass** das Reduzierstück (16) am Außenumfang ein Außengewinde aufweist, mit dem das Reduzierstück in den Einfüllstutzen (10) des Behälters eingeschraubt werden kann.

5. Einsatzelement (13) gemäß einem der vorangehenden Ansprüche 2 bis 3,
**dadurch gekennzeichnet, dass** das Reduzierstück (16) am Außenumfang Nasen (36) aufweist, die mit einem Tankdeckel-Verschlusselement (42) des Einfüllstutzens (10) zusammen einen Bajonett-Verschluss bilden.

6. Einsatzelement (13) nach einem der Ansprüche 1 bis 5,
**dadurch gekennzeichnet, dass** das Abdeckelement (24) an seiner Einfüllöffnungsseite eine Rohrmuffe mit Außengewinde (30) aufweist, und das Einsatzelement ferner einen Deckel (33) mit Innengewinde umfasst, der zum Verschließen des Einsatzelements (13) auf die Rohrmuffe aufschraubbar ist.

7. Einsatzelement (13) nach Anspruch 6,
**dadurch gekennzeichnet, dass** das Gewinde des Deckels (33) oder das für das Deckelgewinde komplementäre Gewinde der Rohrmuffe (30) ein ansteigendes Gewinde ist, um einen Widerstand zum Lösen des Deckels von der Rohrmuffe zu schaffen, sodass der Deckel nur durch gewollte manuelle Drehung lösbar ist.

8. Einsatzelement (13) nach einem der Ansprüche 2 bis 7,
**dadurch gekennzeichnet, dass** das Reduzierstück (16) an seiner Einfüllöffnungsseite eine Bajonett-Ausnehmung hat, und ein Deckel für das Einsatzelement (13) vorgesehen ist, der an seiner Unterseite Nasen aufweist, die zur Bildung eines Bajonett-Verschlusses zwischen Deckel und Reduzierstück in die Bajonett-Ausnehmung greifen.

9. Einsatzelement (13) nach einem der Ansprüche 2 bis 8,
**dadurch gekennzeichnet, dass** am Innenumfang des Reduzierstücks (16) Ausnehmungen (39) in seiner axialen Längsrichtung vorgesehen sind, sodass zwischen einer in das Einsatzelement eingesetzten Harnstoff-Zapfpistole (12) und dem Reduzierstück (16) Luft hindurchströmen kann.

10. Einsatzelement (13) nach Anspruch 8 oder 9,
**dadurch gekennzeichnet, dass** das Einsatzelement einen Spezial-Werkzeugschlüssel umfasst, der mit Nasen in die Ausnehmungen (39) oder die BajonettAusnehmung greifen kann, um das Einsatzelement (13) in einem Einfüllstutzen durch Verdrehen desselben zu arretieren.

11. Einsatzelement (13) nach einem der Ansprüche 2 bis 10,
**dadurch gekennzeichnet, dass** eine Diebstahlsicherung des Einsatzelements (13) in Form einer Schraube vorgesehen ist, die in eine in dem Reduzierstück (16) quer zu seiner Achse vorgesehenen Bohrung eindrehbar ist, sodass das Einsatzelement (13) in dem Einfüllstutzen (10) arretiert werden kann.

12. Einsatzelement nach einem der vorangehenden Ansprüche,
**dadurch gekennzeichnet, dass** das Abdeckelement (24) eine deren Öffnung überdeckende verschwenkbare Verschlussklappe (44) aufweist.

13. Einsatzelement nach Anspruch 12,
**dadurch gekennzeichnet, dass** mindestens ein Ablaufkanal (45) vorgesehen ist, über den bei geschlossener Verschlussklappe (44) auf diese auftreffende Flüssigkeit abgeleitet wird.

14. KFZ-Behälter für Harnstoff, dessen Einfüllstutzen mit einem Einsatzelement (13) gemäß einem der Ansprüche 1 bis 13 ausgerüstet ist.

15. Mobiler Behälter mit einer Einfüllöffnung und einem die Einfüllöffnung verschließbaren, abnehmbaren Deckel, durch welche Einfüllöffnung mit Hilfe einer tankstellenseitigen Zapfpistole (12) Harnstoff in den geöffneten Behälter gefüllt werden kann,
**dadurch gekennzeichnet, dass** die Einfüllöffnung an ihrem Außenrand eine lichte Weite hat, die kleiner ist als der Außendurchmesser des für Dieselkraftstoff standardisierten Zapfpistolen-Auslaufrohres.

16. Mobiler Behälter nach Anspruch 15,
**dadurch gekennzeichnet, dass** in der Einfüllöffnung unterhalb ihres Außenrandes ein Magnet angeordnet ist, der mit einem in Zapfpistolen vorgesehenen Magnetschalter wechselwirken kann.

17. Mobiler Behälter nach Anspruch 15 oder 16,
**dadurch gekennzeichnet, dass** das Abdeckelement (24) eine deren Öffnung überdeckende verschwenkbare Verschlussklappe (44) aufweist.

18. Mobiler Behälter nach Anspruch 17,
**dadurch gekennzeichnet, dass** mindestens ein Ablaufkanal (45) vorgesehen ist, über den bei geschlossener Verschlussklappe (449 auf diese auftreffende Flüssigkeit abgeleitet wird.

## Claims

1. An insert element (13) for a container provided with a filler neck (10) which is suitable for filling with urea at a filling station by means of a pump nozzle (12), which insert element (13) comprises
- a covering element (24) with an opening the inner diameter of which is smaller than the external diameter of a standardised pump nozzle spout (12) for diesel fuel,
- and holding means by means of which the covering element (24) positioned on the opening plane of the filler neck (10) can be fastened so that diesel fuel can not collect in front of the covering element.

2. The insert element (13) according to Claim 1,
**characterised in that** the insert element comprises a reducer (16) which can be pushed into the filler neck (10) of the container.

3. The insert element (13) according to Claim 1 or 2,
**characterised in that** a magnet (19) that can interact with a magnetic switch provided in urea pump nozzles (12) is accommodated in the reducer (16).

4. The insert element (13) according to either of the preceding Claims 2 or 3,
**characterised in that** the reducer (16) has on the outer circumference an external thread by means of which the reducer can be screwed into the filler neck (10) of the container.

5. The insert element (13) according to either of the preceding Claims 2 or 3,
**characterised in that** the reducer (16) has tabs (36) on the outer circumference which form together with a tank cap locking element (42) of the filler neck (10) a bayonet lock.

6. The insert element (13) according to any of Claims 1 to 5,
**characterised in that** the covering element (24) has on its filling opening side a pipe sleeve with an external thread (30), and the insert element further comprises a cap (33) with an internal thread which can be screwed onto the pipe sleeve in order to lock the insert element (13).

7. The insert element (13) according to Claim 6,
**characterised in that** the thread of the cap (33) or the complementary thread of the pipe sleeve (30) for the cap thread is an ascending thread for creating resistance to the cap becoming loose on the pipe sleeve so that the cap can only be released by intentional manual turning.

8. The insert element (13) according to any of Claims 2 to 7,
**characterised in that** the reducer (16) has a bayonet recess on its filling opening side and there is provided for the insert element (13) a cap that has on its lower side tabs which engage in the bayonet recess so as to form a bayonet lock between the cap and the reducer.

9. The insert element (13) according to any of Claims 2 to 8,
**characterised in that** there are provided on the inner circumference of the reducer (16) recesses (39) in its axial longitudinal direction so that air can flow through between a urea pump nozzle (12) inserted into the insert element and the reducer (16).

10. The insert element (13) according to Claim 8 or 9,
**characterised in that** the insert element comprises a special tool wrench that can engage with tabs in the recesses (39) or the bayonet recess in order to lock the insert element (13) in a filler neck by rotating the latter.

11. The insert element (13) according to any of Claims 2 to 10,
**characterised in that** an anti-theft device of the insert element (13) is provided in the form of a screw which can be screwed into a bore hole provided in the reducer (16) transverse to its axis so that the insert element (13) can be locked in the filler neck (10).

12. The insert element (13) according to any of the preceding Claims,
**characterised in that** the covering element (24) comprises a pivotable closure flap (44) covering the opening of said covering element (24).

13. The insert element according to Claim 12,
**characterised in that** at least one outflow channel (45) is provided by means of which, with the closure flap (44) closed, any fluid in contact therewith is discharged.

14. A motor vehicle container for urea, the filler neck of which is equipped with an insert element (13) according to any of Claims 1 to 13.

15. A portable container comprising a filling opening and a removable cap for closing off the filling opening, by means of which filling opening the opened container can be filled with urea with the aid of a pump nozzle (12) at a filling station, **characterised in that** the filling opening has on its outer edge an inner diameter which is smaller than the external diameter of the standardised pump nozzle spout for diesel fuel.

16. The portable container according to Claim 15,
**characterised in that** there is disposed in the filling opening beneath its outer edge a magnet which can interact with a magnetic switch provided in pump nozzles.

17. The portable container according to Claim 15 or 16,
**characterised in that** the covering element (24) has a pivotable closure flap (44) covering the opening of said covering element (24).

18. The portable container according to Claim 17,
**characterised in that** at least one outflow channel (45) is provided by means of which, with the closure flap (44) closed, any fluid in contact therewith is discharged.

## Revendications

1. Elément rapporté (13) pour un récipient équipé d'une tubulure de remplissage (10) apte à être rempli d'urée au moyen d'un pistolet distributeur (12) en station-service, lequel élément rapporté (13) présente :
- un élément de recouvrement (24) muni d'une ouverture dont le diamètre intérieur est inférieur au diamètre extérieur d'un tuyau d'écoulement de pistolet distributeur (12) normalisé pour le diesel,
- ainsi qu'un moyen de maintien, avec lequel l'élément de recouvrement (24) peut être fixé en position sur le plan d'ouverture de la tubulure de remplissage (10), de telle sorte que le diesel ne peut pas se collecter devant l'élément de recouvrement.

2. Elément rapporté (13) selon la revendication 1, **caractérisé par le fait que** l'élément rapporté présente un raccord de réduction (16) à insérer par coulissement dans la tubulure de remplissage (10) du récipient.

3. Elément rapporté (13) selon la revendication 1 ou 2, **caractérisé par le fait qu'**un aimant (19), qui peut interagir avec un commutateur magnétique prévu dans les pistolets distributeurs d'urée (12), est logé dans le raccord de réduction (16).

4. Elément rapporté (13) selon l'une des revendications précédentes 2 ou 3, **caractérisé par le fait que** le raccord de réduction (16) présente un filetage extérieur sur la circonférence extérieure, avec lequel le raccord de réduction peut être vissé dans la tubulure de remplissage (10) du récipient.

5. Elément rapporté (13) selon l'une des revendications précédentes 2 à 3, **caractérisé par le fait que** le raccord de réduction (16) présente des ergots (36) sur la circonférence extérieure, qui forment une fermeture à baïonnette conjointement avec un élément de fermeture du bouchon de réservoir (42) de la tubulure de remplissage (10).

6. Elément rapporté (13) selon l'une des revendications 1 à 5, **caractérisé par le fait que** l'élément de recouvrement (24) présente au niveau de son ouverture de remplissage un manchon tubulaire avec un filetage extérieur (30), et l'élément rapporté comporte en outre un bouchon (33) avec un filetage intérieur qui peut être vissé sur le manchon tubulaire pour fermer l'élément rapporté (13).

7. Elément rapporté (13) selon la revendication 6, **caractérisé par le fait que** le filetage du bouchon (33) ou le filetage complémentaire du manchon tubulaire (30) pour le filetage du bouchon est un filetage ascendant pour créer une résistance pour libérer le bouchon du manchon tubulaire, de telle sorte que le bouchon ne peut être libéré que par une rotation manuelle intentionnelle.

8. Elément rapporté (13) selon l'une des revendications 2 à 7, **caractérisé par le fait que** le raccord de réduction (16) a un évidement en baïonnette au niveau de son ouverture de remplissage, et un bouchon est prévu pour l'élément rapporté (13), qui présente des ergots sur sa face inférieure, qui viennent en prise dans l'évidement à baïonnette pour former une fermeture à baïonnette entre le bouchon et le raccord de réduction.

9. Elément rapporté (13) selon l'une des revendications 2 à 8, **caractérisé par le fait que** des évidements (39) sont prévus sur la circonférence intérieure du raccord de réduction (16) dans sa direction axiale longitudinale, de telle sorte que de l'air peut circuler entre un pistolet distributeur d'urée (12) utilisé dans l'élément rapporté et le raccord de réduction (16).

10. Elément rapporté (13) selon la revendication 8 ou 9, **caractérisé par le fait que** l'élément rapporté comprend une clé spéciale qui peut venir en prise avec les ergots dans les évidements (39) ou l'évidement à baïonnette pour bloquer l'élément rapporté (13) dans une tubulure de remplissage en tournant ladite clé.

11. Elément rapporté (13) selon l'une des revendications 2 à 10, **caractérisé par le fait qu'**une sécurité contre le vol de l'élément rapporté (13) est prévue sous la forme d'une vis qui peut être vissée dans un alésage, prévu transversalement à son axe, dans le raccord de réduction (16), de telle sorte que l'élément rapporté (13) peut être bloqué dans la tubulure de remplissage (10).

12. Elément rapporté selon l'une des revendications précédentes, **caractérisé par le fait que** l'élément de recouvrement (24) présente une clapet de fermeture (44) pivotant couvrant l'ouverture.

13. Elément rapporté selon la revendication 12, **caractérisé par le fait qu'**au moins un canal d'évacuation (45) est prévu, par lequel le liquide surgissant est dévié sur le clapet de fermeture (44) lorsque ce dernier est fermé.

14. Réservoir d'automobile pour urée, dont la tubulure de remplissage est équipée d'un élément rapporté (13) selon l'une des revendications 1 à 13.

15. Récipient mobile comportant une ouverture de remplissage et un bouchon amovible pouvant fermer l'ouverture de remplissage, à travers laquelle ouverture de remplissage de l'urée peut être versée dans le récipient ouvert à l'aide d'un pistolet distributeur (12) en station-service, **caractérisé par le fait que** l'ouverture de remplissage a un diamètre intérieur au niveau de son bord extérieur qui est inférieur au diamètre extérieur du tuyau d'écoulement de pistolet distributeur normalisé pour le diesel.

16. Récipient mobile selon la revendication 15, **caractérisé par le fait qu'**un aimant est disposé dans l'ouverture de remplissage en dessous de son bord extérieur, qui peut interagir avec un commutateur magnétique prévu dans les pistolets distributeurs.

17. Récipient mobile selon la revendication 15 ou 16, **caractérisé par le fait que** l'élément de recouvrement (24) présente un clapet de fermeture (44) pivotant couvrant l'ouverture.

18. Récipient mobile selon la revendication 17, **caractérisé par le fait qu'**au moins un canal d'évacuation (45) est prévu, par lequel le liquide surgissant est dévié sur le clapet de fermeture (44) lorsque ce dernier est fermé.
